Europäisches Patentamt

European Patent Office

Office européen des brevets

(19)

(11) EP 0 668 843 B1

(12) FASCICULE DE BREVET EUROPEEN

(45) Date de publication et mention
de la délivrance du brevet:
**28.05.1997 Bulletin 1997/22**

(21) Numéro de dépôt: **94926280.2**

(22) Date de dépôt: **06.09.1994**

(51) Int Cl.6: **C01B 21/24**

(86) Numéro de dépôt international:
**PCT/FR94/01048**

**WO 95/07234 (16.03.1995 Gazette 1995/12)**

(54) **PROCEDE DE TRANSFORMATION PLASMACHIMIQUE DE N2O en NOx ET/OU EN SES DERIVES**

VERFAHREN ZUR PLASMACHEMISCHE UMSETZUNG VON N2O IN NOx UND/ODER IN IHREN DERIVATEN

PROCESS FOR PLASMACHEMICAL TRANSFORMATION OF N2O INTO NOx AND/OR INTO DERIVATIVES THEREOF

(84) Etats contractants désignés:
**AT BE CH DE DK ES FR GB GR IE IT LI LU NL PT SE**

(30) Priorité: **10.09.1993 FR 9311016**

(43) Date de publication de la demande:
**30.08.1995 Bulletin 1995/35**

(73) Titulaire: **RHONE-POULENC FIBER & RESIN INTERMEDIATES**
**92405 Courbevoie (FR)**

(72) Inventeurs:
• **CHARAMEL, André**
**F-69005 Lyon (FR)**
• **CZERNICHOWSKI, Albin**
**F-45100 Orléans (FR)**
• **GORIUS, André**
**Case Western Reserve University**
**Cleveland, OH 44106-7202 (US)**

(74) Mandataire: **Vignally, Noel**
**Rhône-Poulenc Chimie**
**Direction Propriété Industrielle**
**CRIT-Carrières**
**B.P. 62**
**69192 Saint-Fons Cédex (FR)**

(56) Documents cités:
**EP-A- 0 555 110**

• **DATABASE WPI Week 8652, Derwent Publications Ltd., London, GB; AN 86-343366 & JP,A,61 257 940 (ASAHI CHEMICAL IND KK) 15 Novembre 1986**

## Description

Le domaine de la présente invention est celui du traitement et de la valorisation du protoxyde d'azote $N_2O$ (gaz hilarant) et, plus particulièrement, de sa transformation en produit du type $NO_x$ avec $x = 1$ ou 2, ainsi qu'en dérivés, tels que par exemple l'acide nitrique $HNO_3$.

La présente invention concerne un procédé d'oxydation plasmachimique de l'oxyde de diazote.

Sur un volume de 100 de $N_2O$ rejeté dans l'atmosphère, il est généralement admis que 70 % provient du métabolisme du règne végétal, 10 % des combustions en tous genres, 10 % des moteurs à combustion interne des automobiles et les 10 % restants sont des effluents gazeux de l'industrie. 2 % de ces effluents ont pour origine la production d'acide nitrique et 8 % la production d'acide adipique (l'un des composants à la base du polyamide 6,6). (Cf. 5th International Workshop on nitrous oxide emissions - July 1-3, 1992 TSUKUBA [JP]).

Ce protoxyde d'azote $N_2O$ mobilise, depuis quelques temps, d'importants efforts et de gros moyens de recherches, car il est avancé que son accumulation dans l'atmosphère peut constituer un risque pour l'environnement. En particulier, le $N_2O$ est soupçonné de participer au phénomène d'effet de serre.

La durée de vie de $N_2O$ dans l'atmosphère est de l'ordre de 170 ans. C'est un gaz stable à température ambiante qui ne se combine pratiquement pas à l'oxygène moléculaire et qui résiste bien à l'action des oxydants classiques.

Les trois principales voies habituelles de traitement ou de valorisation du $N_2O$ sont:

1 - la destruction thermique par incinération,
2 - la décomposition catalytique en azote et en oxygène gazeux $N_2$ et $O_2$,
3 - et la transformation thermique en $NO_x$ avec $x = 1$ ou 2 et en ses dérivés.

La troisième voie est particulièrement intéressante, car les composés $NO_x$ sont recyclables, par exemple en acide nitrique $HNO_3$. La valorisation du $N_2O$ en $HNO_3$ est du plus grand intérêt, notamment pour les producteurs d'acide adipique, étant donné que l'acide nitrique est utilisé pour convertir le cyclohexanol et/ou la cyclohexanone, par oxydation, en acide adipique, cette réaction produisant, d'ailleurs, environ une mole de $N_2O$ par mole d'acide adipique final. (Nylon Production : an Unknown Source of Atmospheric Nitrous Oxide - N.H. Thiemens, W.C. Trogler, Science, Feb. 1991)

Pour que ce recyclage soit viable, il est impératif que la transformation de $N_2O$ en $NO_x$ s'opère de manière économiquement rentable, c'est-à-dire avec des quantités réduites d'énergie, de réactifs et de catalyseurs.

Mais il se trouve que la réaction $N_2O$ donne $NO + \frac{1}{2} N_2$ est en compétition avec la réaction $N_2O$ donne $N_2 + \frac{1}{2} O_2$.

La transformation $N_2O$ en $NO_x$ est donc très délicate à mettre en oeuvre, comme cela est illustré par le brevet JP 61 25 79 40 qui concerne un procédé de préparation d'acides dicarboxyliques dans lequel on met en oeuvre un recyclage d'acide nitrique. Selon ce procédé, les sous-produits gazeux de l'oxydation, par l'acide nitrique, de cyclohexanol et/ou cyclohexanone en acide adipique, sont soumis en continu à une décomposition thermique sans catalyseur de $N_2O$ en $NO_x$. Ce dernier est ensuite transformé en acide nitrique par oxydation et absorption dans l'eau, selon le schéma réactionnel suivant :

$$2\,NO + O_2 \rightarrow 2\,NO_2$$

$$3\,NO_2 + H_2O \rightarrow 2\,HNO_3 + NO$$

Le $HNO_3$ est ensuite recyclé dans la réaction de synthèse d'acide adipique.

D'après ce brevet japonais, les sous-produits gazeux $NO + NO_2$, qui sont des facteurs limitants de la transformation de $N_2O$ en $NO_x$, doivent être éliminés au maximum.

Les $NO_x$ de départ doivent être à une teneur inférieure à 10 % et, de préférence, à 5 %.

La température réactionnelle est comprise entre 1 000 et 1 300° C, et de préférence 1 000 à 1 200° C, et le temps de séjour de $10^{-2}$ à 100 secondes, et, de préférence de $10^{-1}$ à 10 secondes. Le gaz à traiter est préchauffé à l'aide d'un appareil de chauffage à air chaud, du type échangeur thermique. Dans le réacteur, l'élévation de température du gaz est assurée et auto-entretenue par la chaleur de décomposition.

La mise en oeuvre de telles températures n'est jamais une opération commode et grève le coût de revient du procédé.

Il ressort des exemples de ce brevet que le meilleur résultat obtenu est un rendement de conversion du $N_2O$ en NO égal à 25,4 %.

Dans ces conditions, ceci est en général insuffisant pour rendre le procédé économiquement attractif.

La littérature scientifique à ce sujet confirme cela et enseigne que la formation de NO et/ou $NO_2$ ne représente,

au plus, que quelques % du $N_2O$ converti (cf. notamment A. A. BORISOV, Kinet Katal, 1968, 9 (3) 482 - W. H. LIPKEA et al., Combustion Science and Technology, 1973, 6, 257 - MONAT et al., Combustion Science and Technology, 1977, 16, 21 - I. S. ZASLONKO et al., Kinet Katal, 1980, 21, 311).

Force est donc de constater que la décomposition thermique de $N_2O$ en $NO_x$ et/ou en ses dérivés, qui constitue pourtant la voie de valorisation la plus séduisante, n'est, à ce jour, pas suffisamment performante pour être validée économiquement sur le plan industriel.

Dans cet état de la technique, l'un des objectifs essentiels de la présente invention est de fournir un procédé de transformation de $N_2O$ en $NO_x$ avec x = 1 ou 2 et/ou en ses dérivés, caractérisé par un rendement de production de $NO_x$ par rapport au $N_2O$ converti supérieur à 30 % moles/moles.

Un autre objectif de l'invention est de fournir un procédé de transformation thermique de $N_2O$ en $NO_x$ (x = 1 ou 2) et en ses dérivés, qui soit aisé à mettre en oeuvre et, en particulier, qui ne nécessite pas l'amenée à haute température de l'enceinte réactionnelle.

Un autre objectif de l'invention est de fournir un procédé de transformation du $N_2O$ en un dérivé du $NO_x$, par exemple du type acide nitrique.

Un autre objectif de l'invention est de fournir un dispositif pour la mise en oeuvre du procédé visé ci-dessus, qui concourt à l'atteinte des objectifs retenus ci-dessus pour ledit procédé.

C'est ainsi qu'après de nombreuses expériences et recherches, la Demanderesse a eu le mérite de mettre en évidence qu'il convenait de mettre en oeuvre des arcs et/ou décharges électriques pour la transformation de $N_2O$ en $NO_x$, avec de hauts rendements en $NO_x$ par rapport au $N_2O$ converti.

Il s'ensuit que les objectifs ci-dessus sont atteints par la présente invention qui concerne un procédé de transformation thermique de $N_2O$ en $NO_x$ (x = 1 ou 2), et/ou en ses dérivés, dans lequel le $N_2O$ est mis en présence d'au moins un arc et/ou décharge électrique.

Plus précisément, le procédé selon l'invention consiste :

- à former un jet de gaz à traiter comprenant le $N_2O$,
- à diriger ce jet dans l'espace interstitiel d'au moins deux électrodes divergentes mises sous tension électrique, de manière à créer au moins un arc et/ou décharge électrique et appartenant à un générateur de plasmas basse température, ce dernier fonctionnant par formation de décharges électriques glissantes entre les électrodes, de telle sorte que le gaz circule le long des électrodes à partir de la zone d'arcs et/ou de décharges où les électrodes sont le plus proche l'une de l'autre,
- et à récupérer le gaz comprenant le $NO_x$ formé.

Un tel procédé offre la possibilité d'amorcer la décomposition revalorisante du $N_2O$ à basse température (ambiante), en dehors des équilibres thermodynamiques. Cela est rendu possible par les arcs et/ou décharges électriques glissants qui fournissent de l'énergie au gaz contenant le $N_2O$ à transformer et qui permettent la génération d'espèces réactives hors équilibre thermodynamique, lesdites espèces induisant des réactions exothermiques.

Les rendements en $NO_x$ atteints sont supérieurs ou égaux à 30 % moles/moles, ce qui est nettement au-dessus des limites généralement admises, à savoir 25 % moles/moles.

Ce résultat est obtenu à faible coût et avec une grande souplesse et commodité de mise en oeuvre.

La présente invention serait incomplète si elle ne comprenait pas un dispositif de mise en oeuvre de ce procédé, ce dispositif comprenant un réacteur constitué par une enveloppe adiabatique contenant :

- un générateur de plasmas basse température fonctionnant par formation d'arcs et/ou de décharges électriques glissants,
- et des moyens pour former le jet de gaz.

Ce générateur comprend au moins une, de préférence au moins trois paire(s) d'électrodes divergentes, reliées à des moyens d'alimentation électriques et agencées de telle sorte qu'elles délimitent un espace interstitiel, formant une zone de décharge évasée.

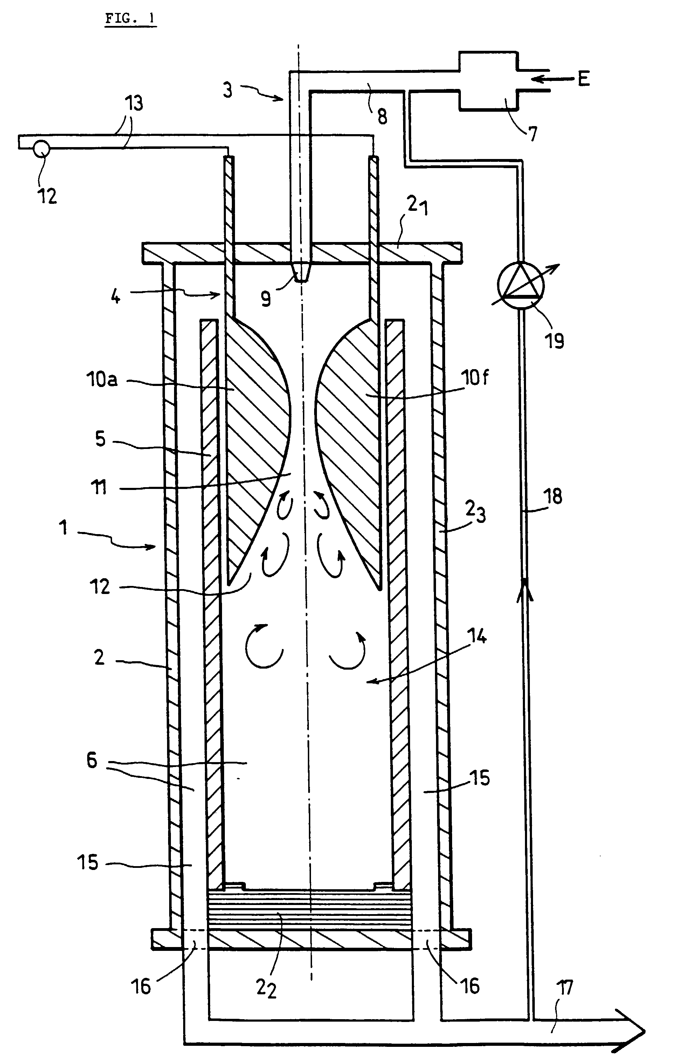

L'invention sera mieux comprise et d'autres de ses avantages et variantes de mise en oeuvre ressortiront bien de la description qui suit, d'un exemple non limitatif de réalisation d'un dispositif et du procédé y associé, de transformation plasmachimique de $N_2O$ en $NO_x$ avec x = 1 ou 2, en référence au dessin annexé dans lequel la figure unique représente un schéma de principe en coupe longitudinale d'un réacteur objet de l'invention.

Dans cette figure, le réacteur est designé par la référence générale **1**. Il comprend une enveloppe adiabatique **2** contenant des moyens d'injection **3** du gaz à transformer, un générateur de plasma à arcs et/ou décharges glissants **4**, un insert **5** tubulaire de confinement du gaz et une zone de transformation **6** du $N_2O$ en $NO_x$.

Les moyens d'injection **3** du gaz à traiter incluent un organe **7** permettant au besoin le préchauffage du gaz. Cet organe de préchauffage **7** (brûleur, résistance électrique, échangeur de chaleur) est monté sur une conduite **8** d'amenée du gaz sous pression de l'entrée **E** à une buse **9** d'injection montée dans le couvercle **21** de l'enveloppe **2**.

La buse **9** débouche à la base de six électrodes divergentes **10a** à **10f**. Ce sont des plaques conductrices disposées dans des plans radiaux avec un décalage angulaire de 60°, et appariées et symétriques par rapport à l'axe. Ces électrodes sont divergentes, c'est-à-dire que leurs bords internes en vis-à-vis s'écartent progressivement de la base jusqu'à leurs extrémités libres.

Ces électrodes **10a** à **10f** définissent un espace interstitiel ou une zone de décharges et/ou arcs évasée **11**, dans lequel les décharges et/ou arcs électriques glissants sont destinés à se déplacer de la base vers l'extrémité des électrodes.

L'alimentation électrique des électrodes est assurée par des générateurs triphasés **12**, représentés symboliquement avec leurs fils de connexion **13** sur le dessin.

Pour plus de précisions, on se reportera à la description du générateur de plasma faite par la demande de brevet français n° 2 639 172.

L'insert tubulaire **5** est coaxial à l'enveloppe **2** et présente une hauteur inférieure à cette dernière. L'insert **5** définit avec le fond **2₂** de l'enveloppe **2** un espace de confinement **14** du gaz entrant sous pression par la buse **9**. Cet espace est occupé, dans la partie supérieure, par les électrodes **10a** à **10 f**.

Par ailleurs, l'insert **5** définit avec la paroi **2₃** de l'enveloppe **2** une chambre annulaire externe **15**. Cette dernière communique avec l'intérieur de l'insert **5** au niveau de la tête de l'enveloppe et comprend à sa base des ouvertures **16** reliées des conduites **17** d'évacuation du gaz traité vers l'extérieur. Une partie du gaz parvenu à cet endroit peut être recyclé par l'intermédiaire d'une conduite **18**, reliant la conduite **17** d'évacuation à la conduite **8** d'amenée. La circulation du gaz à l'intérieur de cette conduite **18** est placée sous le contrôle d'une pompe **19**, pouvant également être une partie de la buse **9**.

A ce dispositif, il est parfaitement envisageable d'associer, par intégration ou de façon indépendante et séparée du réacteur de transformation du $N_2O$ en NO, un module de conversion du $NO_x$ en ses dérivés, du type acide nitrique.

Ce module peut, par exemple, comprendre des moyens de refroidissement des gaz, en sortie de transformation, et des moyens de conversion stricto sensu.

Un système de trempe à l'eau constitue un exemple avantageux de moyens de refroidissement, notamment en raison du fait qu'il permet d'éviter la décomposition du $No_x$ par un mécanisme de type Zeldovich inverse.

Les moyens de conversion sont préférablement, formés par un système d'oxydoabsorption, de préférence, par une colonne d'oxydoabsorption à l'eau.

A titre de variante du dispositif, on pourrait prévoir d'inclure dans le réacteur une chambre adiabatique allongée, dite "piston", de façon à optimiser la transformation du $N_2O$ en $NO_x$.

Conformément à une caractéristique préférée de l'invention, les matériaux constitutifs du réacteur et/ou des électrodes sont des céramiques.

Une telle conformation du réacteur **1** a pour effet, en fonctionnement, de provoquer le refoulement du gaz entrant sous pression par la buse **9**, du fond **2₂** de l'espace de confinement **14** vers la partie haute comprenant les électrodes **10a** à **10f**.

Il se forme ainsi un régime turbulent dans l'espace **14** et plus particulièrement dans la zone **11** d'arcs et/ou de décharges, que l'on pourrait également dénommer zone de turbulence.

Sous la pression, le gaz refoulé passe ensuite dans la chambre annulaire externe **15**, via l'extrémité supérieure ouverte de l'insert **5**.

Le gaz est ensuite acheminé vers la sortie en circulant en travers des ouvertures **16** des conduites d'évacuation **17**.

La zone de transformation **6** plasmachimique de $N_2O$ en $NO_X$ se trouve pour partie dans l'espace de confinement, notamment dans la partie inférieure de celui-ci, et pour partie dans la zone **11** des électrodes **10a** à **10f** et dans la chambre annulaire externe **15**.

En ce qui concerne le procédé de transformation plasmachimique de $N_2O$ en $NO_x$ et/ou en ses dérivés, il convient de signaler qu'il est préférable le mettre en oeuvre à une pression comprise entre 0 et $10 \times 10^5$ Pa, de préférence, entre 0 et $6 \times 10^5$ Pa et, plus préférentiellement encore, à une pression atmosphérique normale ($1 \times 10^5$ Pa).

Le gaz à transformer est constitué par du $N_2O$ pur ou sensiblement pur ou bien encore par un mélange de $N_2O$ avec l'air ou $N_2$ et/ou $O_2$ et/ou $CO_2$ et/ou NO et/ou $NO_2$ ou tout autre gaz approprié pour constituer un milieu gazeux dispersif pour $N_2O$. Il est important que la teneur en $NO_x$ du gaz à transformer soit inférieure à 10 % en volume, de préférence, inférieure à 5 % en volume.

Le mélange gazeux à traiter peut, par exemple, être un résidu de vapeurs nitreuses obtenu par traitement à l'eau des gaz issus de l'oxydation nitrique de cyclohexanone et/ou cyclohexanol, lors de la formation d'acide adipique.

En outre, la Demanderesse a pu mettre en évidence qu'il est particulièrement avantageux d'éliminer la vapeur d'eau du mélange gazeux contenant le $N_2O$ à transformer.

Pour ce faire, on emploie tout moyen convenable et approprié, comme par exemple la condensation par refroidissement du jet de gaz à transformer.

La température d'entrée du jet de gaz dans la zone de décharge est avantageusement comprise entre 0 et 800° C, de préférence, entre 400 et 700° C, le préchauffage éventuel du gaz rentrant pouvant être assuré par une recirculation des gaz effluents.

La vitesse du jet de gaz à l'entrée du réacteur est un paramètre important du procédé. Avantageusement, on fixe ce paramètre entre 5 et 30 m/s, de préférence entre 7 et 20 m/s et plus préférentiellement encore à une valeur de l'ordre de 10 m/s.

Selon un autre aspect particulièrement intéressant du procédé selon l'invention, le gaz à traiter est soumis à un régime très turbulent dans la zone 11 de décharge du générateur ( zone de turbulence).

Les arcs et/ou décharges électriques sont essentiels pour la fourniture hors de l'état d'équilibre thermodynamique, d'espèces réactives permettant la transformation de $N_2O$ en $NO_x$. L'un des avantages apporté par les arcs et/ou décharges glissants est une moindre usure des électrodes.

La puissance électrique mise en jeu est avantageusement comprise entre 0,01 et 1, de préférence entre 0,02 et 0,5 et plus préférentiellement encore cette puissance est de l'ordre de $0,15 \pm 0,05$ kWh/kg de $N_2O$ entrant.

Etant donné que la transformation de $N_2O$ en $N_2$ et $O_2$ est fortement exothermique (environ 80 kJ/mole), la décomposition thermique amorcée ou initiée par le générateur de plasma basse température, fonctionnant par formation d'arcs et/ou de décharges électriques glissantes entre les électrodes divergentes, est thermiquement auto-entretenue.

Les exemples qui suivent du procédé de transformation de $N_2O$ en $NO_x$ (x = 1 ou 2), à l'aide du dispositif décrit ci-dessus, conformément à l'invention, permettent de mieux comprendre cette dernière et montrent quelques-uns de ses avantages et de ses variantes.

## EXEMPLES 1 A 14:

### 1. Appareillage :

Le dispositif mis en oeuvre est comparable à celui représenté à la **Figure unique.** Le générateur de plasma basse température est apte à produire, sur les électrodes divergentes, des décharges électriques glissantes triphasées, caractérisées par des tensions de fonctionnement élevées (quelques kV) et des courants relativement faibles (fraction d'ampères). Ce processus est séquentiel. La durée de vie d'une décharge est comprise entre 5 et 20 millisecondes, selon la vitesse du gaz injecté.

### 2. Réactif-produit - conditions réactionnelles :

Les expériences réalisées dans le présent exemple le sont à partir de mélanges homogènes de $N_2O$ avec $N_2$, $O_2$, $CO_2$ et/ou NO, stockés sous une pression pouvant atteindre 67 bars.

On a fait varier le débit du gaz entrant de 12,7 à 50,5 Normolitres par minute. La température initiale du gaz est proche de la température ambiante : environ 25°C.

Dans les expériences qui suivent la température du jet de gaz entrant varie entre 38 et 355°C.

La puissance électrique dissipée dans le réacteur a été mesurée à l'aide d'un compteur d'énergie analogique triphasé à l'entrée du système d'alimentation. Elle évolue entre 0,8 et 2,1 kW.

Dans le cadre des expériences qui suivent, la conversion du NOx en dérivés, tels que $HNO_3$ n'a pas été mise en oeuvre. Les gaz transformés ont simplement été recueillis pour analyse.

### 3. Analyses :

Deux types d'analyses ont été effectuées : une analyse chromatographique et une analyse chimique.

Concernant l'analyse chromatographique, l'appareillage et les conditions opératoires sont les suivantes :

- Chromatographe : Chrompack 9001
- Gaz vecteur : hélium ; débit 5,5 ml/min
- Deux colonnes : "wide-bore" (GS-Molsieve 30 m*0,539 mm et GS-Q 30m* 0,539 mm) et un système de "back-flush)
- Détecteur: à conductibilité thermique
- Intégrateur: Shimadzu C-R5A
- Température du four: 30° C
- Etalonnage : air, $N_2O$ et $CO_2$ pur avant et après une série d'expériences
- Injection : par une boucle gazeuse de 0,25 cm$^3$ ; transfert des gaz par une seringue de 400 cm$^3$.

L'analyse chimique a consisté à un dosage par acidimétrie des $NO_x$ résultant de la mise en contact du mélange gazeux de sortie avec de l'eau oxygénée et en dosant $HNO_3$ par NaOH ou KOH.

4. <u>Résultats</u> :

Les exemples 1 à 5 montrent l'incidence de la variation de la température du jet de gaz entrant.

Les exemples 6 à 8 ont pour but de présenter l'influence de la teneur en vapeur d'eau dans le jet de gaz entrant.

Les exemples 9 à 12 montrent quelles peuvent être les répercutions de la variation du débit du gaz entrant: 22 à 180 Nl/min.

Les exemples 13 et 14 mettent en évidence les conséquences de la présence de $NO_2$ dans le gaz entrant.

Les paramètres et les résultats des exemples 1 à 14 sont donnés dans le tableau ci-après.

Dans ce dernier, E et S signifient repectivement "entrée" et "sortie" du réacteur.

$M$ = Masse molaire

$t$ = température.

$TT_{N2O}$ = Taux de transformation du $N_2O$

= (nombre de moles $N_2O$ E - nombre de moles $N_2O$ S)/nombre de moles $N_2O$ E

$R_{NO}$ = rendement en $NO_x$

= (nombre de moles $NO_x$ S - nombre de moles $NO_x$ E)/(nombre de moles $N_2O$ E - nombre de moles $N_2O$ S)

Les résultats sont rassemblés dans le tableau 1 ci-après.

| Ex | $N_2O$ E mol % | $N_2$ E mol % | $O_2$ E mol % | $H_2O$ E mol % | $CO_2$ E mol % | $NO_2$ E mol % | Débit E Nl/min | T E °C | P elec kW | $N_2O$ S mol % | $NO_2$ S % pds | $TTN_2O$ mol/mol | RNO mol/mol |
|----|----|----|----|----|----|----|----|----|----|----|----|----|----|
| 1  | 47,0 | 41,4 | 11,6 | 0,0 | 0,0 | 0,0 | 37,4 | 38 | 1,18 | 28,5 | 7,5 | 29,3 | 42,9 |
| 2  | 47,0 | 41,4 | 11,6 | 0,0 | 0,0 | 0,0 | 45,70 | 50 | 1,19 | 33,1 | 7,3 | 19,7 | 62,2 |
| 3  | 47,0 | 41,4 | 11,6 | 0,0 | 0,0 | 0,0 | 37,4 | 140 | 1,16 | 29,6 | 8,9 | 21,9 | 68,1 |
| 4  | 47,0 | 41,4 | 11,6 | 0,0 | 0,0 | 0,0 | 37,4 | 226 | 1,06 | 27,9 | 8,8 | 27,0 | 54,4 |
| 5  | 47,0 | 41,4 | 11,6 | 0,0 | 0,0 | 0,0 | 37,4 | 355 | 1,04 | 27,7 | 8,7 | 28,0 | 51,7 |
| 6  | 50,9 | 33,9 | 10,8 | 0,0 | 4,4 | 0,0 | 37,4 | 25 | 0,97 | 34,7 | 8,8 | 26,1 | 55,7 |
| 7  | 49,3 | 32,9 | 10,4 | 3,1 | 4,3 | 0,0 | 45,70 | 25 | 0,93 | 33,0 | 5,1 | 27,7 | 30,8 |
| 8  | 47,8 | 31,9 | 10,1 | 6,1 | 4,1 | 0,0 | 37,4 | 25 | 0,93 | 32,7 | 4,6 | 27,4 | 28,4 |
| 9  | 43,8 | 43,9 | 12,3 | 0,0 | 0,0 | 0,0 | 22,00 | 51 | 0,88 | 22,9 | 8,5 | 47,2 | 31,7 |
| 10 | 43,8 | 43,9 | 12,3 | 0,0 | 0,0 | 0,0 | 61 | 52 | 0,62 | 34,1 | 6,1 | 23,4 | 45,9 |
| 11 | 43,8 | 43,9 | 12,3 | 0,0 | 0,0 | 0,0 | 70,40 | 62 | 1,09 | 34,0 | 5,6 | 23,2 | 42,6 |
| 12 | 43,8 | 43,9 | 12,3 | 0,0 | 0,0 | 0,0 | 81,80 | 53 | 1,11 | 30,8 | 5,0 | 29,0 | 30,7 |
| 13 | 31,6 | 46,2 | 12,2 | 0,0 | 0,0 | 10,0 | 46 | 25 | 0,98 | 14,4 | 17,0 | 59,2 | 7,1 |
| 14 | 31,6 | 45,2 | 12,7 | 0,0 | 0,0 | 10,6 | 56 | 25 | 1,07 | 16,8 | 18,2 | 51,2 | 9,5 |

**Tableau 1**

EP 0 668 843 B1

**Revendications**

1. Procédé de transformation plasmachimique de $N_2O$ en $NO_x$ (x = 1 ou 2) et/ou en ses dérivés, caractérisé en ce que le $N_2O$ est mis en présence d'au moins un arc et/ou décharge électrique.

2. Procédé selon la revendication 1, caractérisé en ce qu'il consiste :

   - à former un jet de gaz à traiter comprenant le $N_2O$,
   - à diriger ce jet dans l'espace interstitiel (**11**) d'au moins deux électrodes divergentes (**10a** à **10f**) mises sous tension électrique, de manière à créer au moins un arc et/ou décharge électrique et appartenant à un générateur (**4**) de plasmas basse température, ce dernier fonctionnant par formation d'arcs et/ou décharges électriques glissantes entre les électrodes (**10a** à **10f**),

   de telle sorte que le gaz circule le long des électrodes depuis la zone (**11**) d'arcs et/ou de décharges à partir de la zone d'arcs et/ou de décharges où ces électrodes sont le plus proches l'une de l'autre,

   - et à récupérer le gaz comprenant le $NO_x$ formé.

3. Procédé selon la revendication 1 ou 2, caractérisé en ce que l'on soumet le gaz comprenant le $NO_x$ formé à un traitement de conversion permettant d'obtenir de l'acide nitrique.

4. Procédé selon la revendication 3, caractérisé en ce que le traitement est une oxydoabsorption à l'eau sur colonne, de préférence, associée à une trempe à l'eau.

5. Procédé selon l'une quelconque des revendications 1 à 4, caractérisé en ce que le gaz projeté dans l'espace interstitiel (11) d'arcs et/ou de décharges glissantes est exempt ou sensiblement exempt de vapeur d'eau.

6. Procédé selon l'une quelconque des revendications 1 à 5, caractérisé en ce que la transformation $N_2O$ en $NO_x$ s'opère à une pression comprise entre 0 et $10 \times 10^5$ Pa, de préférence entre 0 et $6 \times 10^5$ Pa et, plus préférentiellement encore, à pression atmosphérique normale ($10^5$ Pa).

7. Procédé selon l'une quelconque des revendications 1 à 6, caractérisé en ce que l'on prévoit, pour le jet de gaz, une température d'entrée dans la zone de décharges comprise entre 0 et 800° C, de préférence entre 400 et 700° C.

8. Procédé selon l'une quelconque des revendications 1 à 7, caractérisé en ce que l'on fixe la vitesse du jet de gaz à l'entrée du réacteur entre 5 et 30 m/s, de préférence entre 7 et 20 m/s et, plus préférentiellement encore, à une valeur de l'ordre de 10 m/s.

9. Procédé selon l'une quelconque des revendications 1 à 8, caractérisé en ce que l'on soumet le gaz à traiter à un régime turbulent dans la zone (**11**) d'arcs et/ou de décharges.

10. Procédé selon l'une quelconque des revendications 1 à 9, caractérisé en ce que le gaz à traiter est exempt ou sensiblement exempt de $NO_x$ avant passage dans la zone d'arcs et/ou de décharges.

11. Procédé selon l'une quelconque des revendications 1 à 10, caractérisé en ce que l'on prévoit une puissance électrique dissipée dans le réacteur comprise entre 0,01 et 1 kWh/kg de $N_2O$ entrant, de préférence entre 0,02 et 0,5 kWh/kg de $N_2O$ entrant, et, plus préférentiellement encore de l'ordre de $0,15 \pm 0,05$ kWh/kg de $N_2O$ entrant.

12. Dispositif pour la mise en oeuvre du procédé selon l'une quelconque des revendications 1 à 11, caractérisé en ce qu'il comprend un réacteur (**1**) constitué par une enveloppe (**2**) adiabatique contenant un générateur (**4**) de plasmas basse température par formation d'arcs et/ou de décharges électriques glissantes et des moyens (**3**) pour former le jet de gaz.

13. Dispositif selon la revendication 12, caractérisé en ce que le générateur (**4**) comprend trois paires d'électrodes (**10a** à **10f**) divergentes reliées à des moyens d'alimentation (**12**) et agencées de telle sorte qu'elles délimitent une zone (**11**) d'arcs et/ou de décharges évasée.

14. Dispositif selon la revendication 13, caractérisé en ce qu'il comprend, en plus du générateur (**4**), une zone de turbulence (**11**), une zone de transformation (**6**) du $N_2O$ en $NO_x$ éventuellement de type "piston", et éventuellement un module de conversion du $NO_x$ obtenu en acide nitrique.

**15.** Dispositif selon l'une quelconque des revendications 12 à 14, caractérisé en ce que les matériaux constitutifs du réacteur et/ou des électrodes sont des céramiques.

**Patentansprüche**

**1.** Verfahren zur plasmachemischen Umwandlung von $N_2O$ in $NO_x$ ($x = 1$ oder 2) und/oder in seine Derivate, dadurch gekennzeichnet, daß das $N_2O$ in Anwesenheit von mindestens einem Lichtbogen und/oder einer elektrischen Entladung eingesetzt wird.

**2.** Verfahren nach Anspruch 1, dadurch gekennzeichnet, daß es besteht in:

- der Bildung eines zu behandelnden, das $N_2O$ umfassenden Gasstrahles,
- der Einleitung dieses Strahles in den Raum (11) zwischen mindestens zwei divergierenden, unter elektrische Spannung gesetzten Elektroden (10a bis 10f) in der Weise, daß mindestens ein Lichtbogen und/oder eine elektrische Entladung erzeugt werden, die zu einem Generator (4) für Niedrigtemperatur-Plasma gehören, wobei dieser letztere unter Bildung von Lichtbögen und/ oder elektrischen Entladungen arbeitet, die zwischen den Elektroden (10a bis 10f) übergehen,

so daß das Gas ausgehend von der Zone der Lichtbögen und/oder der Entladungen, wo diese Elektroden gegenseitig am meisten angenähert sind, längs der Elektroden zur Zone (11) der Lichtbogen und/oder der Entladungen zirkuliert,

- der Gewinnung des das gebildete $NO_x$ umfassenden Gases.

**3.** Verfahren nach Anspruch 1 oder 2, dadurch gekennzeichnet, daß man das das gebildete $NO_x$ enthaltende Gas einer Umsetzungsbehandlung unterzieht, die es ermöglicht, Salpetersäure zu erhalten.

**4.** Verfahren nach Anspruch 3, dadurch gekennzeichnet, daß die Behandlung eine Oxydationsabsorption mit Wasser auf einer Kolonne ist, vorzugsweise assoziiert mit einem Abschrecken durch Wasser.

**5.** Verfahren nach irgendeinem der Ansprüche 1 bis 4, dadurch gekennzeichnet, daß das in den Zwischenraum (11) der übergehenden Lichtbögen und/oder der Entladungen eingeleitete Gas frei oder nahezu frei von Wasserdampf ist.

**6.** Verfahren nach irgendeinem der Ansprüche 1 bis 5, dadurch gekennzeichnet, daß die Umwandlung $N_2O$ in $NO_x$ bei einem Druck zwischen 0 und $10 \times 10^5$ Pa, vorzugsweise zwischen 0 und $6 \times 10^5$ Pa, und ganz besonders bevorzugt bei normalem atmosphärischem Druck ($10^5$ Pa) erfolgt.

**7.** Verfahren nach irgendeinem der Ansprüche 1 bis 6, dadurch gekennzeichnet, daß man für den Gasstrahl eine Temperatur für den Eintritt in die Zone der Entladungen zwischen 0 °C und 800 °C, vorzugsweise zwischen 400 °C und 700 °C vorsieht.

**8.** Verfahren nach irgendeinem der Ansprüche 1 bis 7, dadurch gekennzeichnet, daß man die Geschwindigkeit des Gasstrahles am Eintritt des Reaktors zwischen 5 und 30 m/s, vorzugsweise zwischen 7 und 20 m/s und ganz besonders bevorzugt auf einen Wert in der Größenordnung von 10 m/s festlegt.

**9.** Verfahren nach irgendeinem der Ansprüche 1 bis 8, dadurch gekennzeichnet, daß man das zu behandelnde Gas in der Zone (11) der Lichtbögen und/oder der Entladungen einem turbulenten Regime unterwirft.

**10.** Verfahren nach irgendeinem der Ansprüche 1 bis 9, dadurch gekennzeichnet, daß das zu behandelnde Gas vor seiner Passage durch die Zone der Lichtbögen und/oder der Entladungen frei oder nahezu frei von $NO_x$ ist.

**11.** Verfahren nach irgendeinem der Ansprüche 1 bis 10, dadurch gekennzeichnet, daß man in dem Reaktor eine elektrische Verlustleistung zwischen 0,01 und 1 kWh/kg eintretendes $N_2O$, vorzugsweise zwischen 0,02 und 0,5

kWh/kg eintretendes $N_2O$ und ganz besonders bevorzugt in der Größenordnung von $0{,}15 \pm 0{,}05$ kWh/kg eintretendes $N_2O$ vorsieht.

12. Vorrichtung für die Durchführung des Verfahrens nach einem der Ansprüche 1 bis 11, dadurch gekennzeichnet, daß sie einen Reaktor (1), bestehend aus einer adiabatischen Umhüllung (2), die einen Generator (4) für Niedrigtemperatur-Plasma durch Bildung von übergehenden Lichtbögen und/oder elektrischen Entladungen enthält, und Mittel (3) für die Bildung des Gasstrahles umfaßt.

13. Vorrichtung nach Anspruch 12, dadurch gekennzeichnet, daß der Generator (4) drei Paare von divergierenden Elektroden (10a bis 10f) umfaßt, die mit Mitteln (12) zur Beschickung verbunden und in der Weise angeordnet sind, daß sie eine verbreiterte Zone (11) der Lichtbogen und/oder der Entladungen begrenzen.

14. Vorrichtung nach Anspruch 13, dadurch gekennzeichnet, daß sie außer dem Generator (4) eine Turbulenz-Zone (11), eine Umwandlungs-Zone (6) für $N_2O$ in $NO_x$, gegebenenfalls vom Typ "Kolben", und gegebenenfalls ein Modul für die Umsetzung des erhaltenen $NO_x$ in Salpetersäure umfaßt.

15. Vorrichtung nach irgendeinem der Ansprüche 12 bis 14, dadurch gekennzeichnet, daß die wesentlichen Baumaterialien des Reaktors und/oder der Elektroden von keramischer Beschaffenheit sind.

## Claims

1. Process for the plasma-chemical conversion of $H_2O$ into $NO_x$ (x = 1 or 2) and/or into derivatives thereof, characterized in that the $H_2O$ is placed in the presence of at least one electric discharge and/or arc.

2. Process according to Claim 1,
   characterized in that it consists:

   - in forming a jet of gas to be treated comprising $H_2O$,
   - in directing this jet into the interstitial space (11) of at least two divergent electrodes (10a to 10f) placed under an electric voltage, so as to create at least one electric discharge and/or arc, and being part of a low-temperature plasma generator (4), this generator working by formation of electric discharges and/or arcs sliding between the electrodes (10a to 10f),

   such that the gas circulates along the electrodes from the discharge and/or arc region (11) where these electrodes are closest to each other,

   - and in recovering the gas comprising the $NO_x$ formed.

3. Process according to Claim 1 or 2, characterized in that the gas comprising the $NO_x$ formed is subjected to a conversion treatment which enables nitric acid to be obtained.

4. Process according to Claim 3, characterized in that the treatment is a water oxidoabsorption on a column, preferably combined with a water quenching system.

5. Process according to any one of Claims 1 to 4, characterized in that the gas injected into the interstitial space (11) of the sliding discharges and/or arcs is free of or substantially free of water vapour.

6. Process according to any one of Claims 1 to 5, characterized in that the conversion of $N_2O$ into $NO_x$ is performed at a pressure between 0 and $10 \times 10^5$ Pa, preferably between 0 and $6 \times 10^5$ Pa and even more preferably at normal atmospheric pressure ($10^5$ Pa).

7. Process according to any one of Claims 1 to 6, characterized in that provision is made for an inlet temperature of the gas jet in the discharge zone of between 0 and 800°C, preferably between 400 and 700°C.

8. Process according to any one of Claims 1 to 7, characterized in that the speed of the gas jet at the reactor inlet is set at between 5 and 30 m/s, preferably between 7 and 20 m/s and even more preferably at a value of the order of 10 m/s.

9. Process according to any one of Claims 1 to 8, characterized in that the gas to be treated is subjected to a turbulent regime in the discharge and/or arc zone (11).

10. Process according to any one of Claims 1 to 9, characterized in that the gas to be treated is free of $NO_x$ or substantially free of $NO_x$ before passing into the discharge and/or arc zone.

11. Process according to any one of Claims 1 to 10, characterized in that provision is made for a dissipated electric power in the reactor of between 0.01 and 1 kWh/kg of inlet $N_2O$, preferably between 0.02 and 0.5 kWh/kg of inlet $N_2O$ and even more preferably of the order of $0.15 \pm 0.05$ kWh/kg of inlet $N_2O$.

12. Device for carrying out the process according to any one of Claims 1 to 11, characterized in that it comprises a reactor (1) consisting of an adiabatic jacket (2) containing a low-temperature plasma generator (4) operating by formation of sliding electric discharges and/or arcs and means (3) for forming the jet of gas.

13. Device according to Claim 12, characterized in that the generator (4) comprises three pairs of divergent electrodes (10a to 10f) connected to power supply means (12) and arranged such that they delimit a widening discharge and/or arc zone (11).

14. Device according to Claim 13, characterized in that it comprises, in addition to the generator (4), a turbulence zone (11), a zone for conversion (6) of the $N_2O$ into $NO_x$ which is optionally of the "piston" type, and optionally a module for conversion of the $NO_x$ obtained into nitric acid.

15. Device according to any one of Claims 12 to 14, characterized in that the materials constituting the reactor and/or the electrodes are ceramics.

FIG. 1